# EUROPEAN PATENT APPLICATION

(11) **EP 4 834 558 A1**
(43) Date of publication of application: **04.11.2026**
(21) Application number: 24912925.5
(22) Date of filing: 25.12.2024
(51) Int. Cl.: B29C 33/02, B29C 65/20, B29C 65/70

(54) **MOLD, DEVICE FOR MOLDING WORKPIECE, AND METHOD FOR MOLDING WORKPIECE**

(30) Priority: 28.12.2023 JP 2023223439
(71) Applicant: KAWASAKI JUKOGYO KABUSHIKI KAISHA, Kobe-shi, Hyogo 650-8670 (JP)
(72) Inventor: OKUMURA, Kenshiro, Kobe-shi, Hyogo 6508670 (JP); SHIMADA, Naoki, Kobe-shi, Hyogo 6508670 (JP); TAGATA, Yusuke, Kobe-shi, Hyogo 6508670 (JP); IKEDA, Yuji, Kobe-shi, Hyogo 6508670 (JP); TOSA, Shunichi, Kobe-shi, Hyogo 6508670 (JP); NAKAGAWA, Makoto, Kobe-shi, Hyogo 6508670 (JP); NOMURA, Kazutaka, Kobe-shi, Hyogo 6508670 (JP)
(74) Representative: Bals & Vogel Patentanwälte PartGmbB
(86) International application number: PCT/JP2024/045958
(87) International publication number: WO 2025/143039

(57) **Abstract**

A lower die (1) includes a die surface (1a) on which a workpiece (110) containing a resin is placeable. The lower die (1) presses the workpiece (110) together with an upper die (2) facing the die surface (1a) while heating the workpiece (110). The lower die (1) includes a heating block (10) including a support surface (10a) and a heater (12), and a support mount (20) facing the heating block (10) at a position opposite to the support surface (10a). The support surface (10a) is included in the die surface (1a) to support the workpiece (110). The support mount (20) supports the heating block (10). The support mount (20) includes a cooling channel (22) that allows a cooling medium to pass through.

## Description

### FIELD

The present disclosure relates to a die, an apparatus for forming a workpiece, and a method for forming a workpiece.

### BACKGROUND

Dies known for forming workpieces containing a resin press workpieces while heating them. For example, a die described in Patent Literature 1 joins a stiffener to a panel that is a workpiece. More specifically, the die includes a support body having a support surface that supports the panel. The support surface has a groove to accommodate the stiffener. A heater is located inside the support body to heat contact portions of the panel and the stiffener that are in contact with each other.

### CITATION LIST

### PATENT LITERATURE

Patent Literature 1: U.S. Patent No. 8603279

### BRIEF SUMMARY

When the die described above joins the stiffener to the panel by heating the contact portions of the panel and the stiffener with the heater, the support body may deform under heat from the heater. The thermally deformed support body may affect the panel supported on the support body, lowering the accuracy of forming the panel.

In response to the above, one or more aspects of the present disclosure are directed to a technique for improving the accuracy of forming a workpiece.

A die according to an aspect of the present disclosure includes a die surface on which a workpiece containing a resin is placeable. The die presses the workpiece together with a counter die facing the die surface while heating the workpiece. The die includes at least one heating block including a support surface and a heater, and a support mount facing the at least one heating block at a position opposite to the support surface. The support surface is included in the die surface to support the workpiece. The support mount supports the at least one heating block. The support mount includes at least one cooling channel that allows a cooling medium to pass through.

An apparatus for forming a workpiece according to another aspect of the present disclosure includes the die according to the above aspect on which a workpiece containing a resin is placeable to heat the workpiece, and the counter die that presses the workpiece together with the die according to the above aspect to form the workpiece.

A method for forming a workpiece according to still another aspect of the present disclosure includes preparing the die according to the above aspect, placing the workpiece on the die surface of the die, and pressing the workpiece with the die and the counter die to form the workpiece while heating the at least one heating block and cooling the support mount with the cooling medium flowing through the at least one cooling channel.

The die, the apparatus for forming a workpiece, and the method for forming a workpiece improve the accuracy of forming a workpiece.

### BRIEF DESCRIPTION OF DRAWINGS

FIG. 1 is a schematic perspective view of an apparatus for forming a workpiece according to an embodiment.
FIG. 2 is a schematic diagram of the apparatus for forming a workpiece according to the embodiment.
FIG. 3 is a schematic block diagram of a controller, showing its hardware configuration.
FIG. 4 is a cross-sectional view of a lower die taken along a plane perpendicular to the longitudinal direction.
FIG. 5 is an enlarged view of area A in FIG. 4.
FIG. 6 is an enlarged view of area B in FIG. 4.
FIG. 7 is a perspective view of a workpiece and stiffening members before forming.
FIG. 8 is an enlarged view of the lower die with the workpiece and a stiffening member placed on the lower die.
FIG. 9 is a perspective view of the workpiece and the stiffening members after forming.
FIG. 10 is a diagram illustrating a preheating process of the workpiece.
FIG. 11 is a diagram illustrating a first pressing process of the workpiece.
FIG. 12 is a diagram illustrating a moving process of the workpiece.
FIG. 13 is a diagram illustrating a second pressing process of the workpiece.
FIG. 14 is a diagram illustrating the pressing process of the workpiece performed a predetermined number of times.
FIG. 15 is a cross-sectional view of a lower die according to a first modification.
FIG. 16 is a cross-sectional view of a lower die according to a second modification.

### DETAILED DESCRIPTION

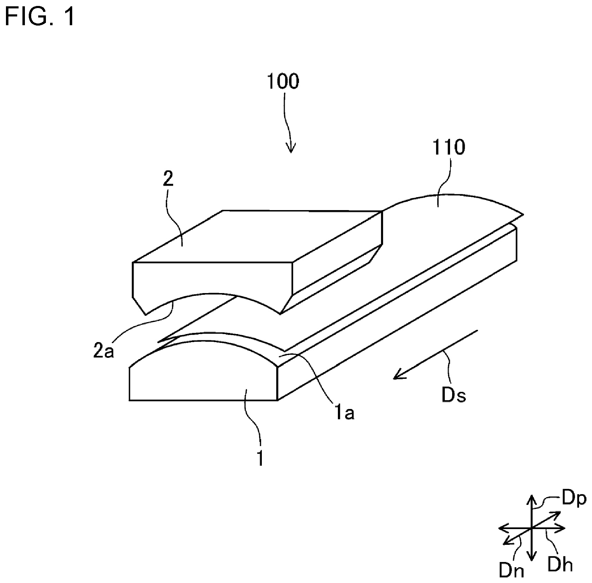

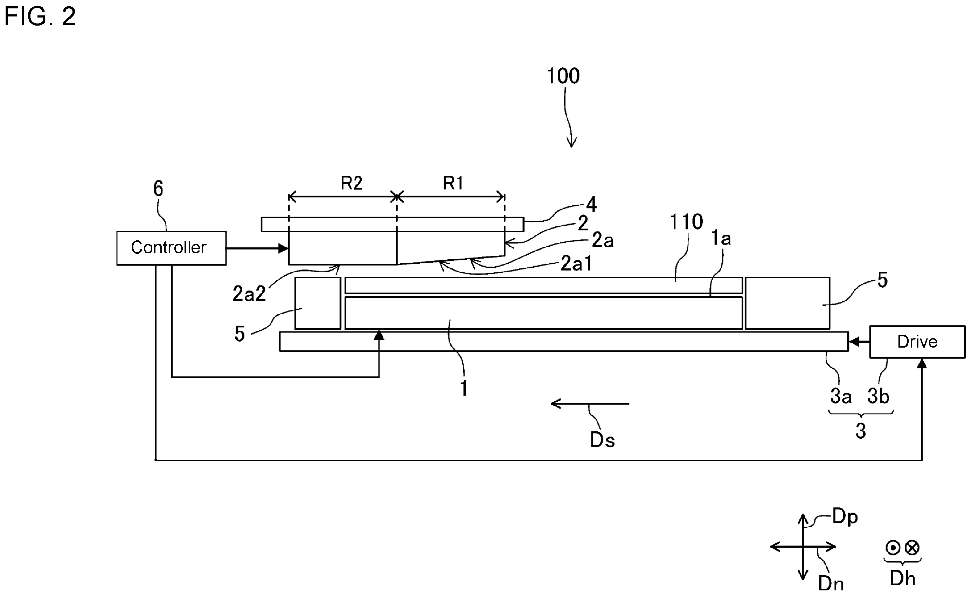

Exemplary embodiments will now be described in detail with reference to the drawings. FIG. 1 is a schematic perspective view of an apparatus 100 for forming a workpiece according to an embodiment. FIG. 2 is a schematic diagram of the apparatus 100 for forming a workpiece according to the embodiment. The apparatus 100 for forming a workpiece is hereafter simply referred to as a forming apparatus 100.

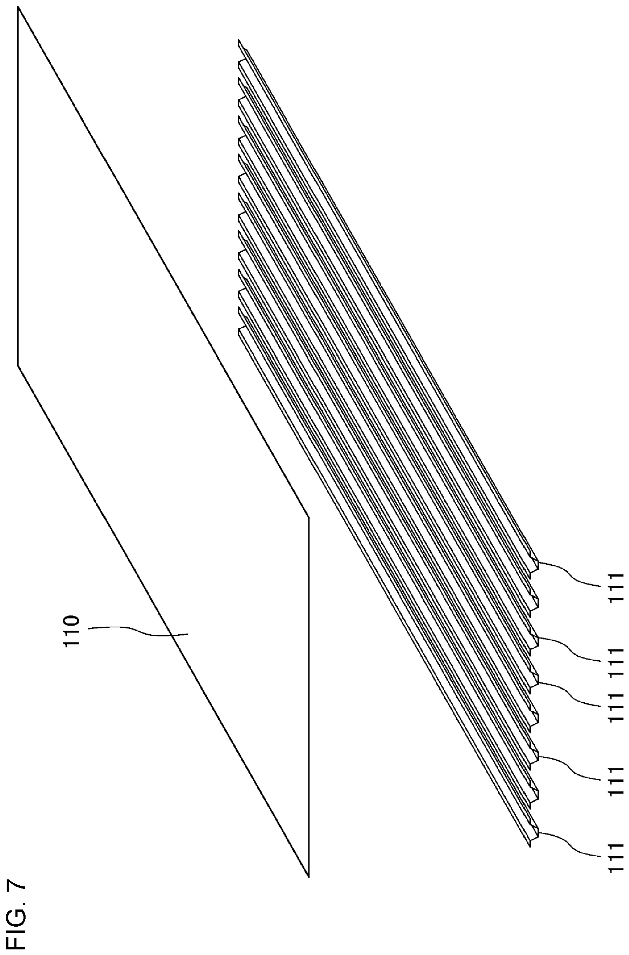

The forming apparatus 100 includes a lower die 1 that heats a workpiece 110 placed on the lower die 1, and an upper die 2 that presses the workpiece 110 together with the lower die 1 to form the workpiece 110. The lower die 1 is an example of a die. The upper die 2 is an example of a counter die. More specifically, the forming apparatus 100 forms the workpiece 110 that is a thin flat plate to be curved in the thickness direction of the workpiece 110. The forming apparatus 100 joins stiffening members 111 shown in FIG. 7 to the workpiece 110. In FIGs. 1 and 2, the stiffening members 111 are not shown to simplify the figures.

The workpiece 110 contains a resin. The resin is, for example, a thermoplastic resin. In this example, the workpiece 110 is a prepreg stack prepared in advance and containing carbon fibers impregnated with a thermoplastic resin. Prepregs are intermediate materials containing fibers impregnated with a resin. A prepreg stack including prepregs stacked on one another is heated and pressed to produce fiber-reinforced plastic (FRP). FRP includes carbon fiber-reinforced thermoplastics (CFRTP). The workpiece 110 after forming is used as an aircraft fuselage panel in this example. The stiffening members 111 are stiffeners for the aircraft fuselage panel in this example, and are also referred to as stringers or longerons.

The lower die 1 has a die surface 1a on which the workpiece 110 is placeable. The upper die 2 faces the die surface 1a. The lower die 1 presses the workpiece 110 together with the upper die 2 while heating the workpiece 110. In this example, the upper die 2 also heats the workpiece 110.

The die surface 1a of the lower die 1 is the upper surface of the lower die 1. The die surface 1a is convex, or more specifically, a convex curved surface. The die surface 1a is an elongated rectangle as viewed from above.

The upper die 2 has a facing surface 2a facing the die surface 1a. The facing surface 2a of the upper die 2 is the lower surface of the upper die 2. The facing surface 2a is concave, or more specifically, a concave curved surface. The facing surface 2a is rectangular as viewed from above. The die surface 1a and the facing surface 2a have shapes corresponding to each other and can be fitted to each other.

The lower die 1 and the upper die 2 can approach or separate relative to each other. In other words, the lower die 1 and the upper die 2 can approach relative to each other to press the workpiece 110. In this example, the upper die 2 can approach or separate from the lower die 1.

Hereafter, the direction in which the workpiece 110 is pressed by the lower die 1 and the upper die 2 and in which the workpiece 110 is released from being pressed is referred to as a pressing direction Dp. The pressing direction Dp is aligned with the vertical direction in this example. The direction in which the die surface 1a is elongated as viewed in the pressing direction Dp is referred to as a longitudinal direction Dn. The direction perpendicular to the longitudinal direction Dn as viewed in the pressing direction Dp is referred to as a width direction Dh.

The die surface 1a of the lower die 1 has a length of, for example, but is not limited to, 2500 mm in the longitudinal direction Dn. The facing surface 2a of the upper die 2 has a length of, for example, but is not limited to, 1080 mm in the longitudinal direction Dn. The die surface 1a of the lower die 1 has a length of, for example, but is not limited to, 2000 mm in the width direction Dh. The facing surface 2a of the upper die 2 has a length of, for example, but is not limited to, 2000 mm in the width direction Dh.

The forming apparatus 100 includes a transferrer 3, an upper die support 4, pressure receiving plates 5, and a controller 6, in addition to the lower die 1 and the upper die 2.

The transferrer 3 includes a base unit 3a and a drive 3b. The lower die 1 and the pressure receiving plates 5 are located on the base unit 3a. The pressure receiving plates 5 are arranged adjacent to the two ends of the lower die 1 in the longitudinal direction Dn and the two ends of the lower die 1 in the width direction Dh. Each pressure receiving plate 5 comes in contact with the upper die 2 to restrict movement of the upper die 2 in the pressing direction Dp.

The drive 3b is controlled by the controller 6 to transfer the base unit 3a in the longitudinal direction Dn. For example, the drive 3b transfers the base unit 3a in a feed direction Ds that is one of the two opposite directions aligned with the longitudinal direction Dn. In other words, the workpiece 110 placed on the lower die 1 is transferred in the feed direction Ds. The drive 3b includes, for example, a rack gear, a pinion gear, and an electric motor. In this case, the rack gear in the base unit 3a is moved in the feed direction Ds as the pinion gear connected to the rotational shaft of the electric motor rotates. This moves the base unit 3a intermittently in the feed direction Ds, causing the lower die 1 to move intermittently in the feed direction Ds accordingly. The drive 3b may include a ball screw and an electric motor, a chain and a hydraulic motor, or a wire and a hydraulic motor, in place of the rack gear, the pinion gear, and the electric motor.

The upper die support 4 supports the upper die 2. The controller 6 controls the upper die support 4. The controller 6 causes the upper die support 4 to move in the pressing direction Dp. The controller 6 causes the upper die support 4 to move toward the lower die 1 in the pressing direction Dp. The upper die 2 thus presses the workpiece 110 placed on the lower die 1. The upper die support 4 includes, for example, a drive with the same structure as the drive 3b. The drive moves the upper die support 4 toward the lower die 1 in the pressing direction Dp.

The controller 6 causes the transferrer 3 to transfer the workpiece 110 placed on the lower die 1 to a predetermined position in the feed direction Ds. Subsequently, the controller 6 causes the upper die support 4 to move the upper die 2 downward at the predetermined position, thus causing the upper die 2 to press the workpiece 110. The controller 6 then raises the upper die 2, transfers the workpiece 110 to a next predetermined position in the feed direction Ds, and causes the upper die 2 to press the workpiece 110 at the predetermined position. In this manner, the controller 6 repeats a cycle of transferring the workpiece 110 and pressing the workpiece 110. This allows the forming apparatus 100 to form the workpiece 110.

The lower die 1 is heated to a predetermined temperature. The lower die 1 heats the workpiece 110 at a temperature around the melting point of the workpiece 110. For example, when the melting point of the workpiece 110 is 305 °C, the predetermined temperature for the lower die 1 is 300 to 330 °C. The melting point and the predetermined temperature are not limited to these values, and an appropriate temperature is determined, as the predetermined temperature, in a range of, for example, the melting point ±40 °C based on the melting point of the workpiece 110.

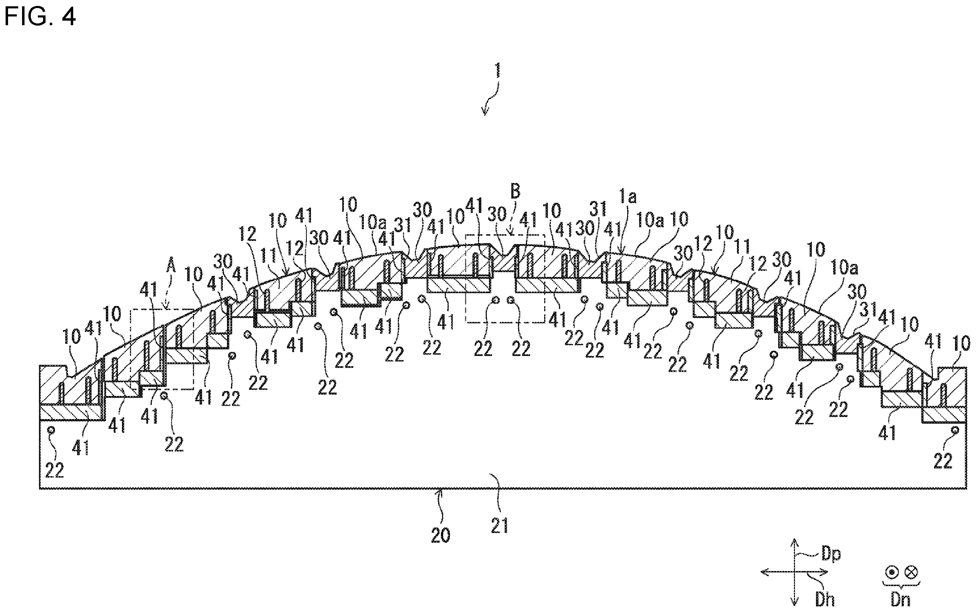

The temperature of the lower die 1 is detected by, for example, a temperature sensor such as a thermocouple or an infrared camera. The lower die 1 includes multiple heaters 12 shown in FIG. 4. For example, a predetermined number of heaters 12 are arranged in the longitudinal direction Dn, and a predetermined number of heaters 12 are arranged in the width direction Dh. The heating operations of the heaters 12 are controlled by the controller 6 to adjust the temperature of the lower die 1.

The lower die 1 includes portions that are controlled by the controller 6 to have a constant temperature in the longitudinal direction Dn. The portions of the lower die 1 are heating blocks 10 (described later) shown in FIG. 4.

The upper die 2 includes multiple temperature-controlled areas R1 and R2 in the longitudinal direction Dn. The temperatures of the temperature-controlled areas R1 and R2 are controlled by the controller 6 independently of each other. More specifically, the controller 6 causes the temperature-controlled areas R1 and R2 to have different temperatures when the workpiece 110 is formed.

More specifically, the upper die 2 includes two temperature-controlled areas R1 and R2 shown in FIG. 2. In other words, the upper die 2 includes a first temperature-controlled area R1 and a second temperature-controlled area R2. The first temperature-controlled area R1 and the second temperature-controlled area R2 are arranged in this order from upstream in the feed direction Ds. The upper die 2 includes heaters arranged in the temperature-controlled areas R1 and R2. The heating operation of the upper die 2 using the heaters is controlled by the controller 6.

In this embodiment, for example, three heaters are arranged in the first temperature-controlled area R1 and, for example, four heaters are arranged in the second temperature-controlled area R2 in the longitudinal direction Dn of the upper die 2. For example, four heaters are arranged in each of the first temperature-controlled area R1 and the second temperature-controlled area R2 in the width direction Dh of the upper die 2.

The controller 6 causes the temperature of the second temperature-controlled area R2 to be lower than the temperature of the first temperature-controlled area R1. More specifically, a temperature T1 of the first temperature-controlled area R1 is set to a process temperature, or for example, in a range of 350 to 420 °C. The process temperature is the highest of the temperatures of the areas. The process temperature is a reference temperature determined based on the melting point of the workpiece 110.

A temperature T2 of the second temperature-controlled area R2 is set to be lower than the temperature T1 of the first temperature-controlled area R1. The temperature T2 is set within a range of, for example, temperatures that are 50 to 150 °C lower than the process temperature. The temperature T1 of the first temperature-controlled area R1 and the temperature T2 of the second temperature-controlled area R2 are detected by temperature sensors in the same manner as in the lower die 1.

The first temperature-controlled area R1 and the second temperature-controlled area R2 each have a length in the feed direction Ds determined in a manner associated with a predetermined distance by which the base unit 3a is moved in the feed direction Ds based on the length of the upper die 2 and the length of the workpiece 110 in the feed direction Ds.

The facing surface 2a of the upper die 2 includes a first heating area 2a1 upstream in the feed direction Ds, and a second heating area 2a2 downstream from the first heating area 2a1 in the feed direction Ds. In this embodiment, the first heating area 2a1 is in the first temperature-controlled area R1, and the second heating area 2a2 is in the second temperature-controlled area R2.

When the second heating area 2a2 is in contact with the workpiece 110, the first heating area 2a1 is spaced from the workpiece 110. More specifically, the first heating area 2a1 has a smaller thickness than the second heating area 2a2 in the pressing direction Dp. In other words, in the process of forming the workpiece 110 in this embodiment, the first temperature-controlled area R1 of the upper die 2 does not come in contact with the workpiece 110, and the second temperature-controlled area R2 repeatedly comes in contact with and separates from the workpiece 110 intermittently. In this embodiment, the first heating area 2a1 has an inclined surface inclined with respect to the longitudinal direction Dn. This allows the first heating area 2a1 to be spaced from the workpiece 110. The second heating area 2a2 has a parallel surface parallel to the longitudinal direction Dn.

The temperature of the entire first heating area 2a1 may be set to be higher than or equal to the melting point of the workpiece 110. The temperature of the second heating area 2a2 may be set to be lower than the melting point of the workpiece 110. The temperature of the lower die 1 may be set to be higher than or equal to the temperature of the second heating area 2a2.

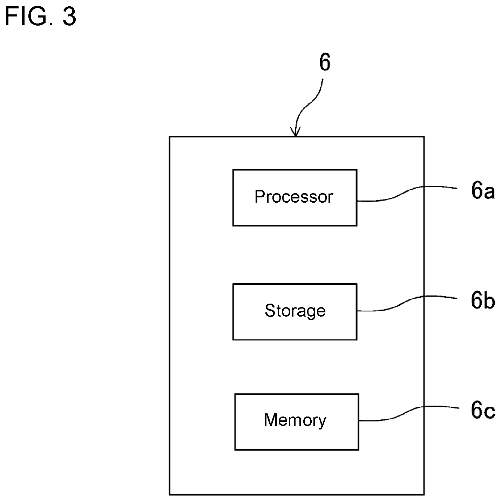

FIG. 3 is a schematic block diagram of the controller 6, showing its hardware configuration. The controller 6 includes a processor 6a, a storage 6b, and a memory 6c.

The processor 6a controls the entire forming apparatus 100. The processor 6a performs various arithmetic operations. For example, the processor 6a includes a processor such as a central processing unit (CPU). The processor 6a may include, for example, a microcontroller unit (MCU), a microprocessor unit (MPU), a field-programmable gate array (FPGA), a programmable logic controller (PLC), or a system large-scale integrated (LSI) circuit.

The storage 6b stores various programs executable by the processor 6a and various sets of data. The storage 6b includes, for example, a nonvolatile memory, a hard disk drive (HDD), or a solid state drive (SSD). The various programs allow the controller 6 to implement various functions. The storage 6b stores data about, for example, allowable ranges of the temperatures of the heaters in the lower die 1 and the upper die 2.

The memory 6c temporarily stores data and other information. For example, the memory 6c includes a volatile memory. Measurements from the temperature sensors in the lower die 1 and the upper die 2 are stored into the storage 6b or the memory 6c.

The processor 6a controls the temperatures of the heaters in the lower die 1 and the upper die 2. The processor 6a causes the temperatures of the heaters in the lower die 1 and the upper die 2 to be within their allowable ranges based on the measurements from the temperature sensors in the lower die 1 and the upper die 2. The processor 6a also controls the drive 3b in the transferrer 3 and the drive in the upper die support. The processor 6a causes these drives to transfer the workpiece 110 to a predetermined position in the feed direction Ds, and move the upper die 2 downward at the predetermined position, causing the upper die 2 to press the workpiece 110.

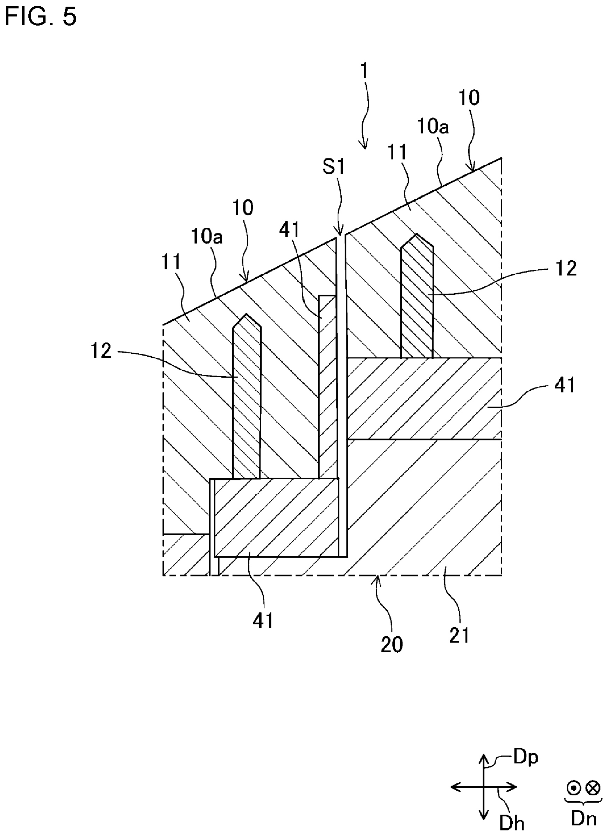

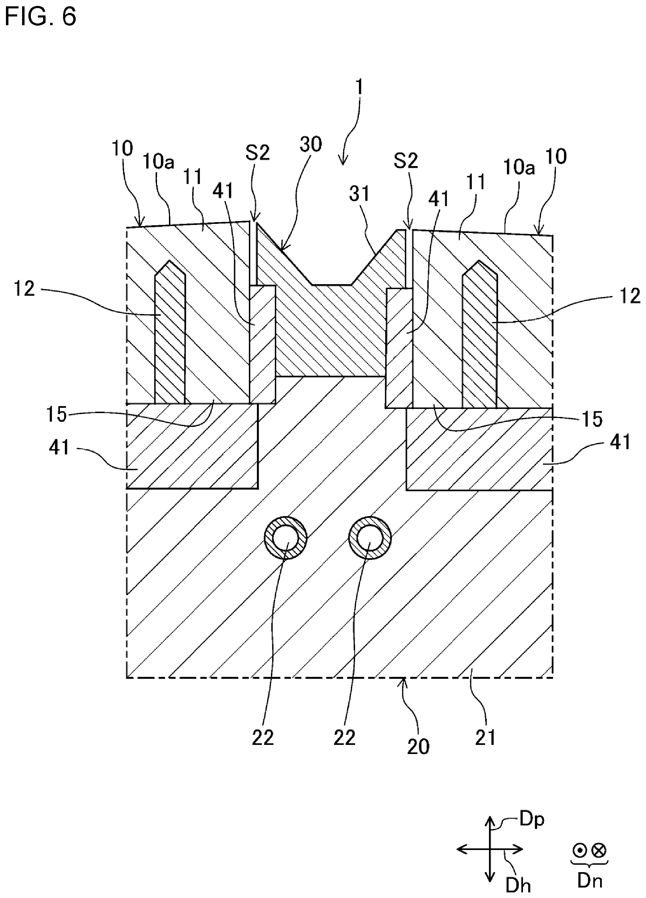

FIG. 4 is a cross-sectional view of the lower die 1 taken along a plane perpendicular to the longitudinal direction Dn. FIG. 5 is an enlarged view of area A in FIG. 4. FIG. 6 is an enlarged view of area B in FIG. 4. The lower die 1 includes at least one heating block 10 and a support mount 20. In FIG. 4, the cross section of the support mount 20 is not hatched to clarify the reference numerals.

At least one heating block 10 includes multiple heating blocks 10 along the die surface 1a. More specifically, at least one heating block 10 includes multiple heating blocks 10 arranged in the width direction Dh. In this example, the lower die 1 includes twelve heating blocks 10 arranged in the width direction Dh.

Each heating block 10 includes a support surface 10a and heaters 12. The support surface 10a supports the workpiece 110 and is included in the die surface 1a.

More specifically, each heating block 10 includes a block body 11 and the heaters 12. The block body 11 has an upper surface serving as the support surface 10a. Examples of the material for the block body 11 include carbon steel. The block body 11 extends in the longitudinal direction Dn. The support surface 10a is a convex curved surface.

The heaters 12 are embedded in the block body 11. The heaters 12 are not exposed on the support surface 10a. The heaters 12 are, for example, cartridge heaters. In each block body 11, a predetermined number of heaters 12 are arranged in the width direction Dh, and a predetermined number of heaters 12 are arranged in the longitudinal direction Dn. For example, in a specific block body 11, two heaters 12 are arranged in the width direction Dh, and twelve heaters 12 are arranged in the longitudinal direction Dn.

The support mount 20 faces the heating blocks 10 at a position opposite to the support surfaces 10a, and supports the heating blocks 10. The support mount 20 includes at least one cooling channel 22 that allows a cooling medium to pass through.

More specifically, the support mount 20 includes a mount body 21. Examples of the material for the mount body 21 include cast iron. The mount body 21 extends in the longitudinal direction Dn. The mount body 21 has an upper surface that is substantially convex. The heating blocks 10 are located along the upper surface of the mount body 21.

The cooling channel 22 is located inside the mount body 21. The cooling channel 22 is defined by, for example, a pipe embedded in the mount body 21. More specifically, the inner space of the pipe serves as the cooling channel 22.

The cooling channel 22 is continuous with, for example, a pump to feed the cooling medium. The cooling medium is, for example, a liquid such as water. The pump is controlled by the controller 6. More specifically, when the heaters 12 in the heating blocks 10 are turned on, the controller 6 starts the operation of the pump. The cooling medium then flows through the cooling channel 22 to cool the support mount 20. The cooling medium may be, for example, a gas such as air.

In a cross section perpendicular to the longitudinal direction Dn, at least one cooling channel 22 includes multiple cooling channels 22 arranged in the width direction Dh. In this example, the support mount 20 includes nineteen cooling channels 22 arranged in the width direction Dh in a cross section perpendicular to the longitudinal direction Dn. The cooling channels 22 are located along the upper surface of the mount body 21 near the upper surface of the mount body 21. All the cooling channels 22 may be continuous with one another, all the cooling channels 22 may be independent of one another, or every predetermined number of cooling channels 22 may be continuous with one another.

The heating blocks 10 and the support mount 20 are separate from each other. The heating blocks 10 are arranged on the upper surface of the support mount 20. Insulators 41 are located between the heating blocks 10 and the support mount 20. Examples of the material for the insulators 41 include a resin and ceramic. The heating blocks 10 are attached to the support mount 20 with fasteners such as bolts. The insulators 41 are held and secured between the heating blocks 10 and the support mount 20.

The lower die 1 further includes at least one member-accommodating block 30. At least one member-accommodating block 30 includes multiple member-accommodating blocks 30 arranged in the width direction Dh. In this example, the lower die 1 includes eight member-accommodating blocks 30 arranged in the width direction Dh.

Each member-accommodating block 30 extends in the longitudinal direction Dn. The member-accommodating block 30 includes a recess 31 being open on the die surface 1a to accommodate the corresponding stiffening member 111 shown in FIG. 7. Examples of the material for the member-accommodating block 30 include carbon steel.

In this example, each member-accommodating block 30 is located between adjacent first and second heating blocks 10 of the heating blocks 10. More specifically, the heating blocks 10 and the member-accommodating blocks 30 are arranged alternately in the width direction Dh. In this embodiment, the heating blocks 10 and the member-accommodating blocks 30 are arranged alternately in a middle portion of the support mount 20 between two end portions of the support mount 20 in the width direction Dh. In each of the two end portions of the support mount 20 in the width direction Dh, the heating blocks 10 are arranged adjacent to each other.

The member-accommodating blocks 30 and the support mount 20 are separate from each other. The member-accommodating blocks 30 are supported on the support mount 20. The member-accommodating blocks 30 are in contact with the support mount 20. The member-accommodating blocks 30 are located along the upper surface of the support mount 20. The member-accommodating blocks 30 are attached to the support mount 20 with fasteners such as bolts.

Each member-accommodating block 30 overlaps cooling channels 22 as viewed in the pressing direction Dp. More specifically, cooling channels 22 are arranged below each member-accommodating block 30.

As shown in FIG. 5, two adjacent heating blocks 10 have a clearance S1 between them at room temperature. The room temperature refers to, for example, the temperature with the heaters 12 being off, and is in a range of, for example, 20 ± 15 °C, or more specifically, 5 to 35 °C, as specified in Japanese Industrial Standards JIS Z 8703. The same applies to room temperature used hereafter. More specifically, the two adjacent heating blocks 10 have the clearance S1 between portions of the two adjacent heating blocks 10. The clearance S1 is, for example, 1 mm in the width direction Dh. In this example, the two adjacent heating blocks 10 have the clearance S1 between their upper side surfaces.

An insulator 41 is located between the two adjacent heating blocks 10. More specifically, the insulator 41 is located between portions of the two adjacent heating blocks 10. In this example, the insulator 41 is located between the lower side surfaces of the two adjacent heating blocks 10.

In place of the clearance S1, an insulator 41 may be located between the upper side surfaces of the two adjacent heating blocks 10, or the two adjacent heating blocks 10 may have a clearance S1 between their lower side surfaces in place of the insulator 41.

FIG. 6 shows the first heating block 10, the second heating block 10, and the member-accommodating block 30 located between the first heating block 10 and the second heating block 10. An insulator 41 is located between the first heating block 10 and the member-accommodating block 30, and another insulator 41 is located between the second heating block 10 and the member-accommodating block 30. More specifically, an insulator 41 is located between a portion of the first heating block 10 and a portion of the member-accommodating block 30. Another insulator 41 is located between a portion of the second heating block 10 and a portion of the member-accommodating block 30. In this example, an insulator 41 is located between a lower side surface of the first heating block 10 and a lower side surface of the member-accommodating block 30, and another insulator 41 is located between a lower side surface of the second heating block 10 and a lower side surface of the member-accommodating block 30. In this case, these insulators 41 may be in contact with the heating blocks 10 and the support mount 20.

The first heating block 10 and the member-accommodating block 30 have a clearance S2 between them at room temperature, and the second heating block 10 and the member-accommodating block 30 have another clearance S2 between them at room temperature. More specifically, the first heating block 10 and the member-accommodating block 30 have a clearance S2 between a portion of the first heating block 10 and a portion of the member-accommodating block 30. The second heating block 10 and the member-accommodating block 30 have another clearance S2 between a portion of the second heating block 10 and a portion of the member-accommodating block 30. In this example, the first heating block 10 and the member-accommodating block 30 have a clearance S2 between their upper side surfaces, and the second heating block 10 and the member-accommodating block 30 have another clearance S2 between their upper side surfaces. Each clearance S2 is, for example, 1 mm in the width direction Dh.

In place of the clearance S2, an insulator 41 may be located between the upper side surface of the first heating block 10 and the upper side surface of the member-accommodating block 30. In place of the clearance S2, an insulator 41 may be located between the upper side surface of the second heating block 10 and the upper side surface of the member-accommodating block 30. The first heating block 10 and the member-accommodating block 30 may have a clearance S2 between their lower side surfaces in place of the insulator 41. The second heating block 10 and the member-accommodating block 30 may have a clearance S2 between their lower side surfaces in place of the insulator 41.

As shown in FIG. 6, each heating block 10 has an end 15 opposite to the support surface 10a in the pressing direction Dp. In a cross section perpendicular to the longitudinal direction Dn, each cooling channel 22 is located farther than the end 15 of the nearest heating block 10 in a direction from the support surface 10a to the end 15. The direction from the support surface 10a to the end 15 is aligned with the pressing direction Dp.

More specifically, the block body 11 of each heating block 10 has a lower end 15. In a cross section perpendicular to the longitudinal direction Dn, each cooling channel 22 is located downward from the lower end 15 of the nearest heating block 10. For example, the cooling channel 22 on the right in FIG. 6 is located downward from the lower end 15 of the nearest heating block 10 on the right. The cooling channel 22 on the left in FIG. 6 is located downward from the lower end 15 of the nearest heating block 10 on the left.

The method for forming the workpiece 110 will now be described.

FIG. 7 is a perspective view of the workpiece 110 and the stiffening members 111 before forming. As shown in FIG. 7, one workpiece 110 and multiple stiffening members 111 are prepared. In this example, eight stiffening members 111, which are as many as the member-accommodating blocks 30, are prepared. The workpiece 110 is a flat plate. Each stiffening member 111 has a hat-shaped cross section. The hat-shaped cross section refers to a shape including a middle portion, side portions standing separately from the respective two ends of the middle portion, and end portions extending outward from the upper ends of the respective side portions in a cross section. The stiffening member 111 may have any other shape, such as a J, I, or Z shape in its cross section. Each member-accommodating block 30 may have a shape corresponding to the shape of the stiffening member 111.

Subsequently, the lower die 1 shown in FIG. 4 is prepared. The workpiece 110 and the stiffening members 111 are placed on the lower die 1. More specifically, the stiffening members 111 are accommodated in the respective member-accommodating blocks 30, and the workpiece 110 is placed on the die surface 1a of the lower die 1.

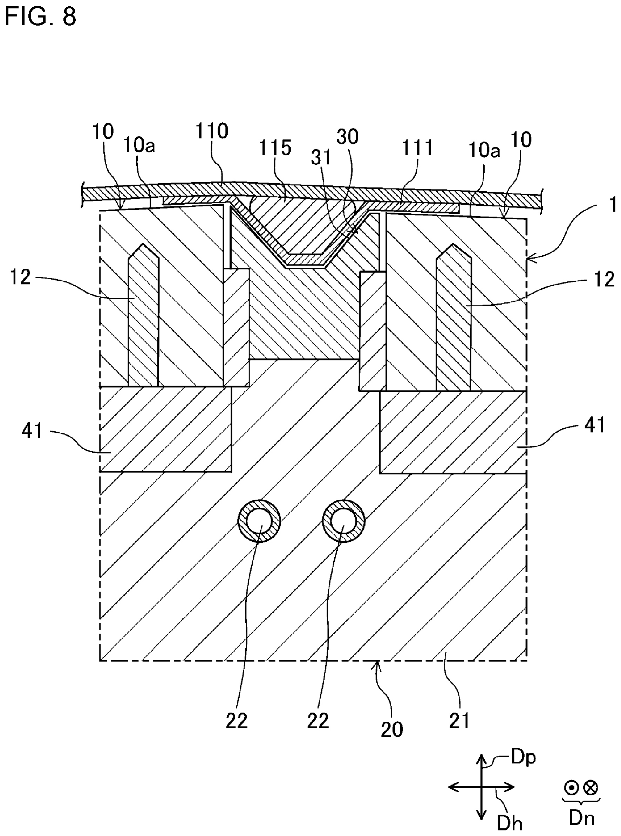

FIG. 8 is an enlarged view of the workpiece 110 and a stiffening member 111 placed on the lower die 1. FIG. 8 corresponds to FIG. 6. More specifically, as shown in FIG. 8, each stiffening member 111 is placed in the recess 31 on the corresponding member-accommodating block 30, and a core 115 is then placed into a recess on the stiffening member 111. In this example, the recess 31 on the member-accommodating block 30 has a shape corresponding to the shape of the stiffening member 111. In this case, joined portions of the stiffening member 111 to be joined to the workpiece 110 are in contact with the support surfaces 10a of the heating blocks 10. Subsequently, the workpiece 110 is placed over the stiffening members 111 along the support surfaces 10a of the heating blocks 10 and the surfaces of the cores 115.

The workpiece 110 is then pressed by the lower die 1 and the upper die 2 to be formed while the heating blocks 10 are heated by the heaters 12 and the support mount 20 is cooled with the cooling medium flowing through the cooling channels 22. The member-accommodating blocks 30 are not heated. Thus, portions of the workpiece 110 facing the member-accommodating blocks 30 are not heated. In contrast, portions of the workpiece 110 facing the heating blocks 10 are heated by the heating blocks 10. The member-accommodating blocks 30 are not heated. Thus, accommodated portions of the stiffening members 111 accommodated in the respective recesses 31 are not heated. The accommodated portions of the stiffening members 111 are already formed, and are thus not to be heated. In contrast, the joined portions of the stiffening members 111 are heated by the heating blocks 10 and joined to the workpiece 110. More specifically, the stiffening members 111 are joined to the workpiece 110 by welding. The workpiece 110, which is pressed by the lower die 1 and the upper die 2 to be formed while the heating blocks 10 are heated by the heaters 12 and the support mount 20 is cooled with the cooling medium flowing through the cooling channels 22, is curved and integrated with the stiffening members 111. The cores 115 are then removed from the recesses on the stiffening members 111.

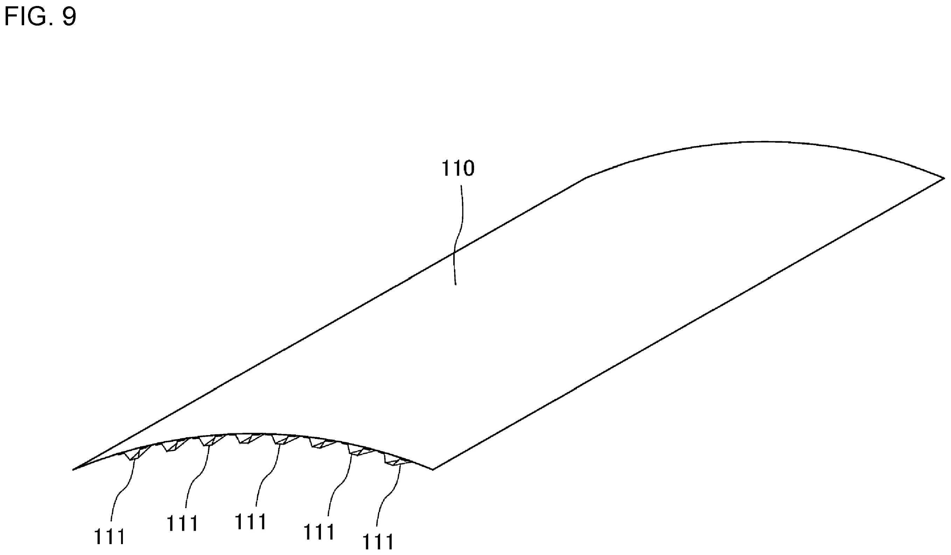

FIG. 9 is a perspective view of the workpiece 110 and the stiffening members 111 after forming. As shown in FIG. 9, the workpiece 110 after forming is curved along the die surface 1a of the lower die 1. The stiffening members 111 are attached parallel to the inner curved surface of the workpiece 110.

The operation performed by the forming apparatus 100 to form the workpiece 110 will now be described in detail.

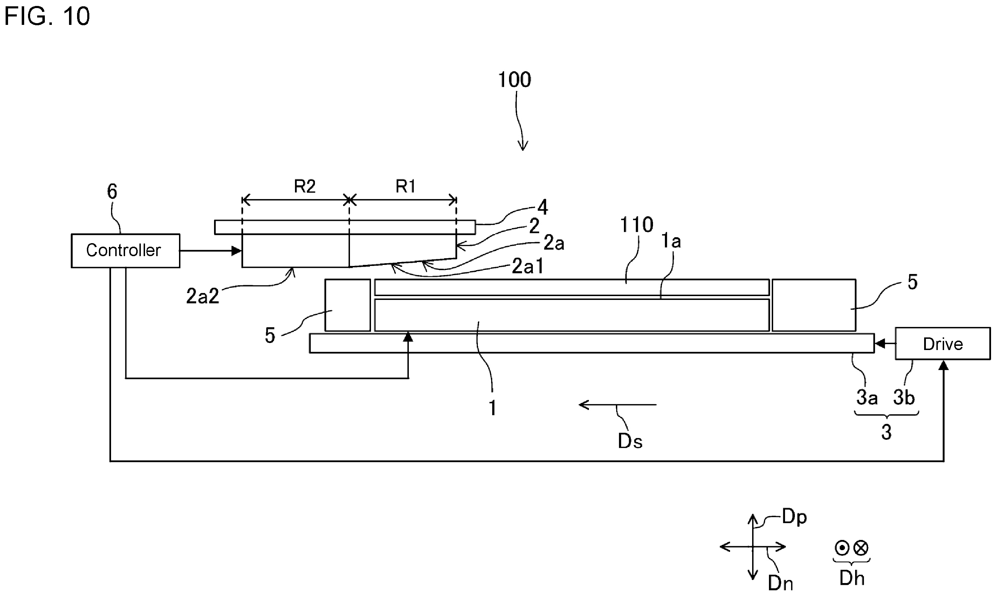

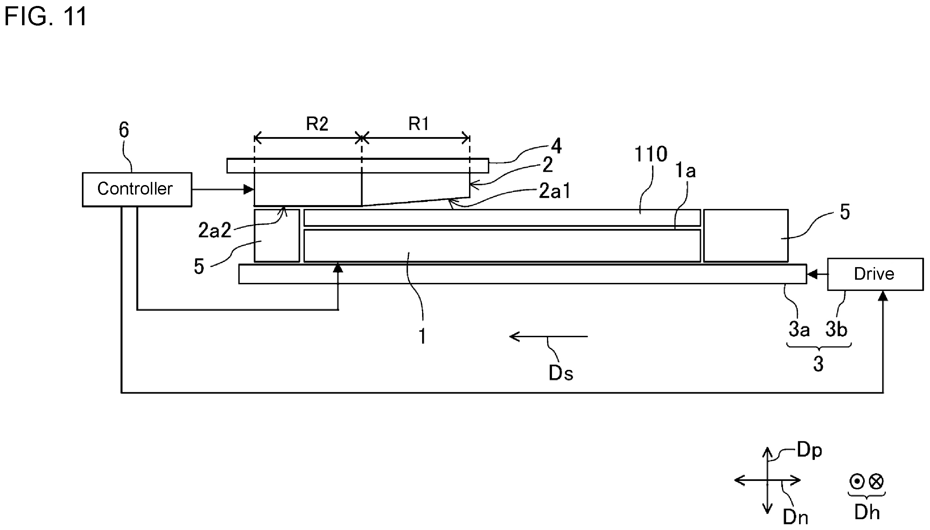

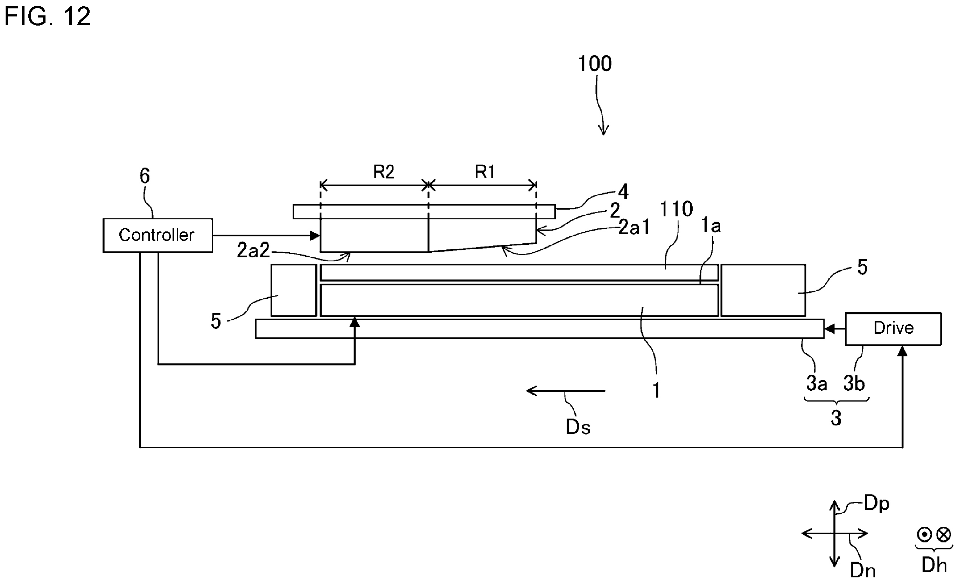

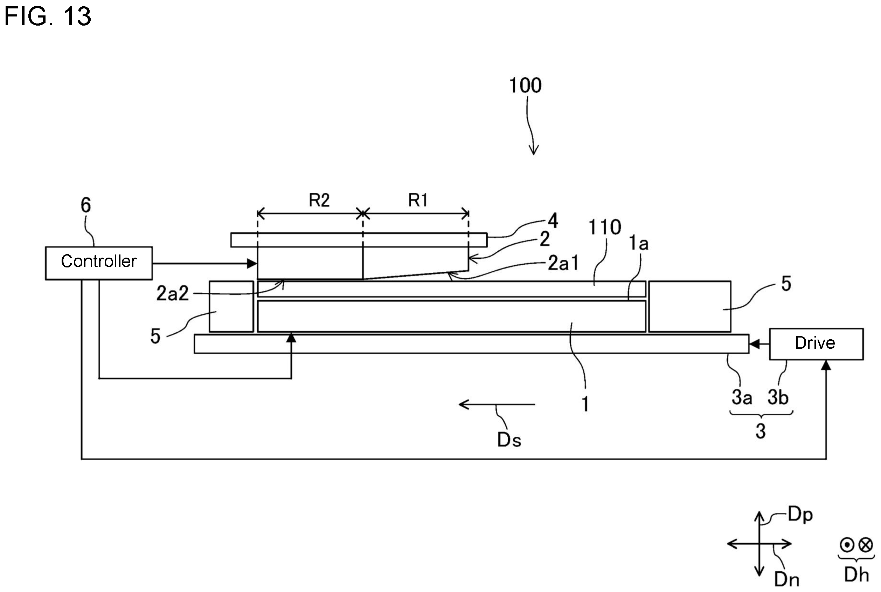

FIG. 10 is a diagram illustrating a preheating process of the workpiece 110. FIG. 11 is a diagram illustrating a first pressing process of the workpiece 110. FIG. 12 is a diagram illustrating a moving process of the workpiece 110. FIG. 13 is a diagram illustrating a second pressing process of the workpiece 110. Being downstream hereafter refers to being downstream in the feed direction Ds, toward which the base unit 3a is transferred. Being upstream refers to being upstream in the feed direction Ds, from which the base unit 3a starts to be transferred.

As shown in FIG. 10, the controller 6 first performs first preheating, or in other words, heating before pressing, on a downstream end portion of the workpiece 110 that is a flat plate. In the example in FIG. 10, the downstream end portion is a left end portion. In this case, the controller 6 heats the downstream end portion of the workpiece 110 with the first heating area 2a1 of the upper die 2 spaced from the downstream end portion of the workpiece 110. When the downstream end portion of the workpiece 110 is heated with the first heating area 2a1 of the upper die 2 spaced from the downstream end portion of the workpiece 110, the temperature of the downstream end portion of the workpiece 110 increases. When the workpiece 110 is formed with the lower die 1 and the upper die 2, a portion of the lower die 1 is controlled to a predetermined temperature by the controller 6.

Subsequently, the controller 6 moves the base unit 3a by a predetermined distance in the feed direction Ds as shown in FIG. 11. The distance by which the base unit 3a is moved is, for example, one tenth of the length of the workpiece 110 in the feed direction Ds. The workpiece 110 moves by the predetermined distance in the feed direction Ds accordingly. The controller 6 then lowers the upper die 2 to press the downstream end portion of the workpiece 110. More specifically, the second heating area 2a2 of the upper die 2 and the lower die 1 press the downstream end portion of the workpiece 110. The pressing time is, for example, but not limited to, 10 seconds or more. When the downstream end portion of the workpiece 110 is pressed, a portion of the workpiece 110 upstream from the downstream end portion, or for example, a middle portion, overlaps the first heating area 2a1 as viewed in the pressing direction Dp. The portion of the workpiece 110 upstream from the downstream end portion, which overlaps the first heating area 2a1 as viewed in the pressing direction Dp, is preheated at the same time. When the downstream end portion of the workpiece 110 is pressed by the second heating area 2a2 of the upper die 2 and the lower die 1, the workpiece 110 and the first heating area 2a1 are not in contact with each other. With the workpiece 110 and the first heating area 2a1 not in contact with each other, preheating is performed by thermal radiation from the first heating area 2a1 or convection of air heated by the first heating area 2a1.

Subsequently, the controller 6 raises the upper die 2 and also moves the base unit 3a by the predetermined distance in the feed direction Ds as shown in FIG. 12. In response to the base unit 3a being moved by the predetermined distance in the feed direction Ds, the workpiece 110 moves by the predetermined distance in the feed direction Ds. The downstream end portion of the workpiece 110 is moved to a position at which the downstream end portion of the workpiece 110 overlaps a downstream end portion of the upper die 2 as viewed in the pressing direction Dp. With the downstream end portion of the workpiece 110 moved to the position at which the downstream end portion of the workpiece 110 overlaps the downstream end portion of the upper die 2 as viewed in the pressing direction Dp, the controller 6 lowers the upper die 2 as shown in FIG. 13 to press the downstream end portion of the workpiece 110 and the portion of the workpiece 110 upstream from the downstream end portion. More specifically, the second heating area 2a2 of the upper die 2 and the lower die 1 press the portion of the workpiece 110 upstream from the downstream end portion, while the downstream end portion of the workpiece 110 is cooled. When the portion of the workpiece 110 upstream from the downstream end portion is pressed by the second heating area 2a2 of the upper die 2 and the lower die 1, the middle portion of the workpiece 110 is below the first heating area 2a1, and is thus preheated.

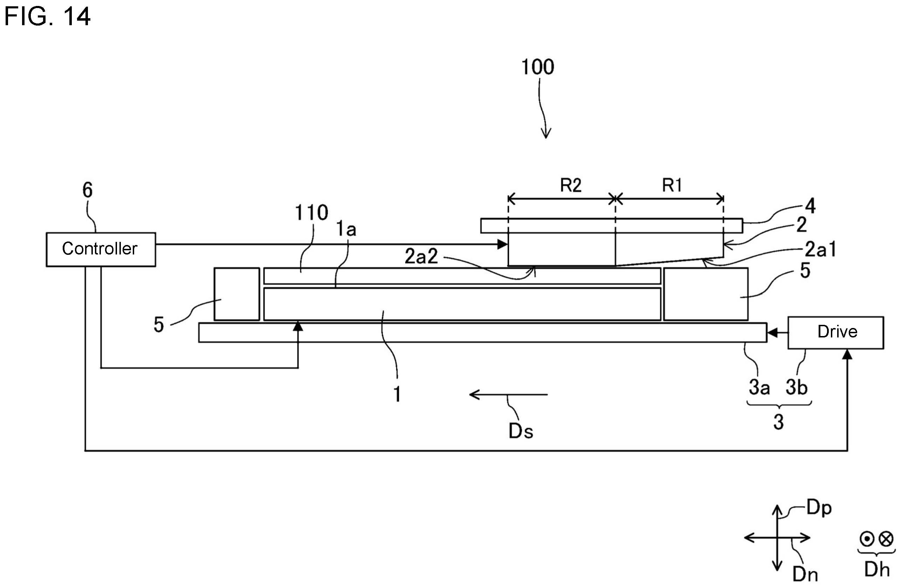

The processes of moving the base unit 3a in the feed direction Ds and raising and lowering the upper die 2 are then repeated until the base unit 3a in the state in FIG. 13 reaches the state in FIG. 14. In this manner, portions of the workpiece 110 that are heated and pressed by the lower die 1 and the upper die 2 can be shifted stepwise from downstream to upstream. After an upstream end portion of the workpiece 110 is heated and pressed by the lower die 1 and the upper die 2, the process of forming the workpiece 110 performed by the forming apparatus 100 ends.

The lower die 1 includes the support mount 20 including the cooling channels 22 that allow the cooling medium to pass through. The support mount 20 is cooled and is thus less likely to deform thermally, reducing thermal deformation of the lower die 1. The workpiece 110 is thus less susceptible to thermal deformation of the lower die 1 when the workpiece 110 is pressed while being heated, improving the accuracy of forming the workpiece 110. In particular, when an aircraft fuselage panel is formed as the workpiece 110, a larger die is used, and thermal expansion of the die thus affects the accuracy of forming intended for the workpiece 110 by a greater degree. However, the use of the lower die 1 improves the accuracy of forming the workpiece 110.

Thermal deformation of the lower die 1 is reduced. Thus, an inexpensive material that may be thermally deformed greatly can be used as the material for the lower die 1. In particular, an inexpensive material can be used as the material for the support mount 20 that is a large part of the lower die 1.

The support mount 20 and the heating blocks 10 are separate from each other. The heating blocks 10 can thus be easily removed from the support mount 20, and can be replaced easily.

The insulators 41 can be arranged between the support mount 20 and the heating blocks 10, which are separate from each other. Heat from the heating blocks 10 is thus less likely to be transmitted to the support mount 20. This further reduces thermal deformation of the support mount 20. The workpiece 110 is thus far less susceptible to thermal deformation of the lower die 1, further improving the accuracy of forming the workpiece 110.

To accommodate any dimensional differences resulting from the temperature distribution or the material thickness of the workpiece 110, the shape of the lower die 1 can be corrected in the pressing direction Dp with shim plates located between the support mount 20 and the heating blocks 10, which are separate from each other.

Two adjacent heating blocks 10 of the heating blocks 10 have the clearance S1 between them. Thus, when the heating blocks 10 expand thermally in a direction along the die surface 1a, the clearances S1 accommodate the thermal expansion of the heating blocks 10, thus further reducing thermal deformation of the lower die 1. More specifically, when the heating blocks 10 expand thermally, the clearances S1 prevent the heating blocks 10 from pushing adjacent heating blocks 10 excessively. The workpiece 110 is thus far less susceptible to thermal deformation of the lower die 1, further improving the accuracy of forming the workpiece 110.

The member-accommodating blocks 30 are supported on the support mount 20. When the stiffening members 111 are joined to the workpiece 110, the support mount 20 is cooled. The cooling effect of the support mount 20 thus cools the member-accommodating blocks 30. This reduces thermal deformation of the member-accommodating blocks 30, thus further reducing thermal deformation of the lower die 1. The workpiece 110 is thus far less susceptible to thermal deformation of the lower die 1, further improving the accuracy of forming the workpiece 110.

The support mount 20 and the member-accommodating blocks 30 are separate from each other. Thus, to accommodate any dimensional differences resulting from the temperature distributions or the material thicknesses of the workpiece 110 and the stiffening members 111, the shape of the lower die 1 can be corrected in the pressing direction Dp with shim plates located between the support mount 20 and the member-accommodating blocks 30.

The heating blocks 10 and the member-accommodating blocks 30 are arranged alternately in the width direction Dh. Each member-accommodating block 30 is thus likely to receive heat from the heating blocks 10 adjacent to the member-accommodating block 30. However, the member-accommodating block 30 is cooled by the cooling effect of the support mount 20. This reduces thermal deformation of the member-accommodating block 30. Thus, the pitch between two adjacent member-accommodating blocks 30 of all the member-accommodating blocks 30 does not vary, further improving the accuracy of forming the workpiece 110.

An insulator 41 is located between the first heating block 10 and the member-accommodating block 30, and another insulator 41 is located between the second heating block 10 and the member-accommodating block 30. Heat from the first heating block 10 and the second heating block 10 is thus less likely to be transmitted to the member-accommodating block 30. This further reduces thermal deformation of the member-accommodating block 30, further reducing thermal deformation of the lower die 1. The workpiece 110 is thus far less susceptible to thermal deformation of the lower die 1, further improving the accuracy of forming the workpiece 110.

When an insulator 41 is located between the first heating block 10 and the member-accommodating block 30 and another insulator 41 is located between the second heating block 10 and the member-accommodating block 30, each insulator 41 may be in contact with the corresponding heating block 10 and the support mount 20with a clearance between the insulator 41 and the member-accommodating block 30. In this structure, when the heating blocks 10 expand thermally, a load resulting from the thermal expansion of the heating blocks 10 is transmitted to the support mount 20 through the insulators 41, but is less likely to be transmitted to the member-accommodating block 30. This reduces a load on the member-accommodating block 30.

The first heating block 10 and the member-accommodating block 30 have a clearance S2 between them, and the second heating block 10 and the member-accommodating block 30 have another clearance S2 between them. Thus, when the first heating block 10 and the second heating block 10 expand thermally in the width direction Dh of the die surface 1a, these clearances S2 accommodate the thermal expansion of the first heating block 10 and the second heating block 10, thus further reducing thermal deformation of the lower die 1. More specifically, when the heating blocks 10 expand thermally, the clearances S2 prevent the heating blocks 10 from pushing adjacent member-accommodating blocks 30 excessively. The workpiece 110 is thus far less susceptible to thermal deformation of the lower die 1, further improving the accuracy of forming the workpiece 110.

Each member-accommodating block 30 overlaps cooling channels 22 as viewed in the pressing direction Dp, and is thus easily cooled by the cooling channels 22. This further reduces thermal deformation of the member-accommodating block 30, further reducing thermal deformation of the lower die 1. The workpiece 110 is thus far less susceptible to thermal deformation of the lower die 1, further improving the accuracy of forming the workpiece 110.

In a cross section perpendicular to the longitudinal direction Dn of the die surface 1a, each cooling channel 22 is located farther than the end 15 of the nearest heating block 10 in the direction from the support surface 10a to the end 15. The direction from the support surface 10a to the end 15 is aligned with the pressing direction Dp, or in other words, downward. The heating blocks 10 are thus less susceptible to the cooling effect of the cooling channels 22, maintaining the heating effect of the heating blocks 10 exerted on the workpiece 110.

The apparatus 100 for forming a workpiece described above, which includes the lower die 1, can reduce thermal deformation of the support mount 20 by cooling the support mount 20, thus reducing thermal deformation of the lower die 1. The workpiece 110 is thus less susceptible to thermal deformation of the lower die 1 when the workpiece 110 is pressed while being heated, improving the accuracy of forming the workpiece 110.

The method for forming a workpiece described above can reduce thermal deformation of the support mount 20 by cooling the support mount 20, thus reducing thermal deformation of the lower die 1. The workpiece 110 is thus less susceptible to thermal deformation of the lower die 1 when the workpiece 110 is pressed while being heated, improving the accuracy of forming the workpiece 110.

### First Modification

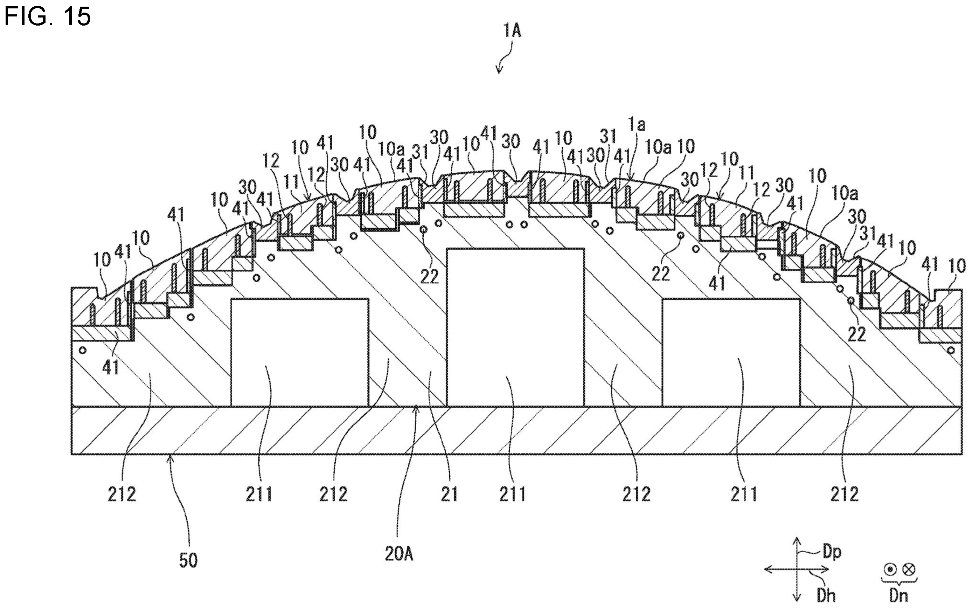

FIG. 15 is a cross-sectional view of a lower die 1A according to a first modification. The lower die 1A according to the first modification differs from the lower die 1 according to the embodiment in that the lower die 1A includes a base 50 and a support mount 20A with another structure. The structure of the lower die 1A according to the first modification will now be described focusing on the differences from the structure of the lower die 1 according to the embodiment. The components of the lower die 1A according to the first modification denoted with the same reference numerals as those of the lower die 1 according to the embodiment have the same structures as those of the lower die 1 according to the embodiment, and will not be described.

The lower die 1A according to the first modification further includes the base 50 supporting the support mount 20A. The base 50 is in contact with the lower surface of the support mount 20A opposite to the heating blocks 10. Examples of the material for the base 50 include cast iron. The base 50 extends in the longitudinal direction Dn.

The support mount 20A includes cavities 211 and pillars 212. The cavities 211 are open to the base 50 of the support mount 20A. The pillars 212 transmit, to the base 50, a force applied to the die surface 1a when the lower die 1A presses the workpiece 110 together with the upper die 2. The cavities 211 and the pillars 212 are in the mount body 21.

More specifically, the cavities 211 are recessed upward from the lower surface of the support mount 20A. The support mount 20A includes multiple cavities 211 in the width direction Dh. In this example, the support mount 20A includes three cavities 211 in the width direction Dh. Each cavity 211 extends in the longitudinal direction Dn. The support mount 20A may include multiple cavities 211 in the longitudinal direction Dn.

The pillars 212 protrude downward from an upper portion of the support mount 20A. The pillars 212 include the lower surface of the support mount 20A. The pillars 212 are, for example, ribs, walls, or poles. The support mount 20A includes multiple pillars 212 in the width direction Dh. In this example, the support mount 20A includes four pillars 212 in the width direction Dh. In other words, each cavity 211 is located between pillars 212 adjacent to each other in the width direction Dh. Each pillar 212 extends in the longitudinal direction Dn. The support mount 20A may include multiple pillars 212 in the longitudinal direction Dn.

In some embodiments, the cavities 211 may have a volume greater than or equal to 30% of the volume of the portion of the support mount 20A other than the cavities 211. In some embodiments, the cavities 211 may have a volume greater than or equal to 50% of the volume of the portion of the support mount 20A other than the cavities 211. The support mount 20A including the cavities 211 in the longitudinal direction Dn allows the lower die 1A to be lighter.

The lower die 1A according to the first modification includes the cavities 211 that reduce thermal expansion of the support mount 20A. When the heaters 12 generate heat with electric power, wires to supply electric power to the heaters 12 can be placed through the cavities 211. When the heaters 12 generate heat with a heating medium, pipes to supply the heating medium to the heaters 12 can be placed through the cavities 211.

The other components, advantages, and effects of the lower die 1 described in the embodiment can be applied to the lower die 1A in the first modification, although such components, advantages, and effects are not described.

### Second Modification

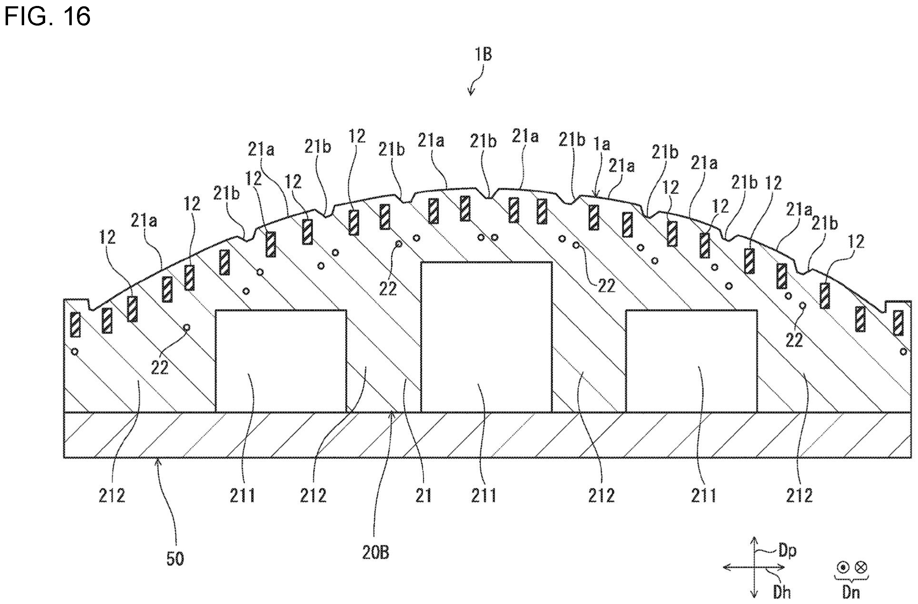

FIG. 16 is a cross-sectional view of a lower die 1B according to a second modification. The lower die 1B according to the second modification differs from the lower die 1 according to the embodiment in that the lower die 1B includes the base 50 and a support mount 20B with another structure. The structure of the lower die 1B according to the second modification will now be described focusing on the differences from the structure of the lower die 1 according to the embodiment. The components of the lower die 1B according to the second modification denoted with the same reference numerals as those of the lower die 1 according to the embodiment have the same structures as those of the lower die 1 according to the embodiment, and will not be described.

The lower die 1B according to the second modification includes the support mount 20B including the die surface 1a and the heaters 12. The heaters 12 are embedded in the support mount 20B. The heaters 12 are not exposed on the die surface 1a. The die surface 1a includes support surfaces 21a that support the workpiece 110. The support surfaces 21a have the same shape as the support surfaces 10a of the heating blocks 10 in the lower die 1 according to the embodiment, and will not be described in detail.

The support mount 20B further includes recesses 21b being open on the die surface 1a to accommodate the respective stiffening members 111 that are joined to the workpiece 110. The recesses 21b have the same shape as the recesses 31 on the member-accommodating blocks 30 in the lower die 1 according to the embodiment, and will not be described in detail.

The support mount 20B includes the mount body 21. Examples of the material for the mount body 21 include cast iron. The mount body 21 extends in the longitudinal direction Dn. The upper surface of the mount body 21 is the die surface 1a.

The support mount 20B further includes at least one cooling channel 22 that allows a cooling medium to pass through. The cooling channel 22 is located inside the mount body 21. The cooling channel 22 is defined by, for example, a pipe embedded in the mount body 21. More specifically, the inner space of the pipe serves as the cooling channel 22.

As described above, the support mount 20B is the heating blocks 10, the member-accommodating blocks 30, and the support mount 20 in the lower die 1 according to the embodiment integrated together. The support mount 20B may not include the recesses 21b on the die surface 1a. The support mount 20B may not include the cooling channel 22.

The lower die 1B further includes the base 50 supporting the support mount 20B. The base 50 is in contact with the lower surface of the support mount 20B opposite to the die surface 1a. Examples of the material for the base 50 include cast iron. The base 50 extends in the longitudinal direction Dn.

The support mount 20B includes the cavities 211 and the pillars 212. The cavities 211 are open to the base 50 of the support mount 20B. The pillars 212 transmit, to the base 50, a force applied to the die surface 1a when the lower die 1B presses the workpiece 110 together with the upper die 2. The cavities 211 and the pillars 212 are in the mount body 21.

More specifically, the cavities 211 are recessed upward from the lower surface of the support mount 20B. The support mount 20B includes multiple cavities 211 in the width direction Dh. In this example, the support mount 20B includes three cavities 211 in the width direction Dh. Each cavity 211 extends in the longitudinal direction Dn. The support mount 20B may include multiple cavities 211 in the longitudinal direction Dn.

The pillars 212 protrude downward from an upper portion of the support mount 20B. The pillars 212 include the lower surface of the support mount 20B. The pillars 212 are, for example, ribs, walls, or poles. The support mount 20B includes multiple pillars 212 in the width direction Dh. In this example, the support mount 20B includes four pillars 212 in the width direction Dh. In other words, each cavity 211 is located between pillars 212 adjacent to each other in the width direction Dh. Each pillar 212 extends in the longitudinal direction Dn. The support mount 20B may include multiple pillars 212 in the longitudinal direction Dn.

In some embodiments, when the heaters 12 generate heat with electric power, wires to supply electric power to the heaters 12 may be placed through the cavities 211. When the heaters 12 generate heat with a heating medium, pipes to supply the heating medium to the heaters 12 may be placed through the cavities 211.

In some embodiments, the cavities 211 may have a volume greater than or equal to 30% of the volume of the portion of the support mount 20B other than the cavities 211. In some embodiments, the cavities 211 may have a volume greater than or equal to 50% of the volume of the portion of the support mount 20B other than the cavities 211. The support mount 20B including the cavities 211 allows the lower die 1B to be lighter.

The lower die 1B according to the second modification includes the cavities 211 that reduce thermal expansion of the support mount 20B, thus reducing thermal deformation of the lower die 1B. The workpiece 110 is thus less susceptible to thermal deformation of the lower die 1B when the workpiece 110 is pressed while being heated, improving the accuracy of forming the workpiece 110. Wires to supply electric power to the heaters 12 or pipes to supply a heating medium to the heaters 12 can be placed through the cavities 211.

The support mount 20B includes the cooling channel 22 that allows the cooling medium to pass through. The support mount 20B is cooled and is thus less likely to deform thermally, further reducing thermal deformation of the lower die 1B.

The other components, advantages, and effects of the lower die 1 described in the embodiment can be applied to the lower die 1B in the second modification, although such components, advantages, and effects are not described.

### Other Embodiments

Although the above embodiments are described based on exemplary techniques according to one or more embodiments of the disclosure of the present application, such techniques according to one or more embodiments of the present disclosure are not limited to those described in the above embodiments and may be modified, substituted, added, or eliminated as appropriate. The components described in the above embodiments may be combined with one another in other embodiments. The components described with reference to the accompanying drawings and in the detailed description of the embodiments may include not merely those that are essential for solving the issue but also those that are not essential for solving the issue for illustrating the techniques. Thus, the components that are included in the accompanying drawings or the detailed description but are not essential should not be identified readily as being essential.

For example, although the workpiece 110 contains a thermoplastic resin, the workpiece 110 may contain a thermosetting resin.

Although the workpiece 110 after forming is used as an aircraft fuselage panel, the workpiece 110 after forming may be used as an elongated panel such as a panel for a vehicle or a panel for a train. Although the stiffening members 111 are stringers, the stiffening members 111 may be stiffeners such as ribs. Each stiffener such as a rib may have a hat-shaped cross section, or may have any other shape, such as a J, I, or Z shape in its cross section. Each member-accommodating block 30 may have a shape corresponding to the shape of the stiffener.

Although the lower die 1 is used as the die, and the upper die 2 is used as the counter die, the die may be any die on which the workpiece 110 can be placed, and the counter die may be any die that can face the die. The die and the counter die are not limited to a lower die and an upper die arranged in the direction of gravity.

Although the workpiece 110 is pressed multiple times by the lower die 1 and the upper die 2 to complete forming with the lower die 1 moved in the feed direction Ds and the upper die 2 moved in the vertical direction each time, the workpiece 110 may be pressed once to complete forming.

Although the lower die 1 and the upper die 2 heat the workpiece 110, the lower die 1 alone may heat the workpiece 110.

Although the lower die 1 is controlled to a constant temperature in the longitudinal direction Dn, the lower die 1 may be controlled to include two temperature-controlled areas in the longitudinal direction Dn during the process of forming the workpiece 110. More specifically, the lower die 1 may be controlled to include a first temperature-controlled area that is controlled to a predetermined temperature, and a second temperature-controlled area that is adjusted to a temperature lower than the predetermined temperature. In this case, the lower die 1 may be controlled to change the ratio between the first temperature-controlled area and the second temperature-controlled area during the process of forming the workpiece 110.

Although the upper die 2 includes the two temperature-controlled areas R1 and R2 arranged in the longitudinal direction Dn, the upper die 2 may include one temperature-controlled area alone or three or more temperature-controlled areas.

Although the upper die 2 can approach or separate from the lower die 1, the lower die 1 may approach or separate from the upper die 2, or the lower die 1 and the upper die 2 may approach or separate from each other.

Although the lower die 1 moves in the feed direction Ds, the lower die 1 and the upper die 2 may be relatively movable in the feed direction Ds, and thus the upper die 2 may move in the feed direction Ds.

The number of heating blocks 10 may be increased or decreased, and may be, for example, one. The number of member-accommodating blocks 30 may be increased or decreased, and may be, for example, one.

The number of heaters in the lower die 1 and the upper die 2 may be increased or decreased. The number of cooling channels 22 may be increased or decreased in a cross section perpendicular to the longitudinal direction Dn.

Although the die surface 1a includes the support surfaces 10a, the die surface 1a may include a surface of a component other than the heating blocks 10.

Two adjacent heating blocks 10 may not have the clearance S1 between them at room temperature, and may be in contact with each other.

At least the first heating block 10 and the member-accommodating block 30 or the second heating block 10 and the member-accommodating block 30 may have the clearance S2 between them at room temperature. Each heating block 10 and the member-accommodating block 30 may not have the clearance S2 between them at room temperature, and may be in contact with each other.

The insulators 41 may not be arranged between the heating blocks 10 and the support mount 20, and the heating blocks 10 and the support mount 20 may be in contact with each other.

Two adjacent heating blocks 10 may not have the clearance S1 between them, and an insulator 41 may be located between them. The insulator 41 may not be located between two adjacent heating blocks 10, and the two adjacent heating blocks 10 may have a clearance S1 between them.

Although at least one heating block 10 includes the multiple heating blocks 10 arranged in the width direction Dh, at least one heating block 10 may include multiple heating blocks 10 arranged in the longitudinal direction Dn. At least one heating block 10 may be multiple heating blocks 10 arranged in the longitudinal direction Dn.

The first heating block 10 and the member-accommodating block 30 may not have the clearance S2 between them, and an insulator 41 may be located between them. The second heating block 10 and the member-accommodating block 30 may not have the clearance S2 between them, and an insulator 41 may be located between them. The insulator 41 may not be located between the first heating block 10 and the member-accommodating block 30, and the first heating block 10 and the member-accommodating block 30 may have a clearance S2 between them. The insulator 41 may not be located between the second heating block 10 and the member-accommodating block 30, and the second heating block 10 and the member-accommodating block 30 may have a clearance S2 between them.

Although each cooling channel 22 is located downward from the lower end 15 of the nearest heating block 10, at least one cooling channel 22 may be located upward from the lower end 15 of the nearest heating block 10.

Although the lower die 1 includes the member-accommodating blocks 30, the lower die 1 may eliminate the member-accommodating blocks 30. In this case, two adjacent heating blocks 10 may have a clearance S1 between them at room temperature.

Although the method for forming the workpiece 110 includes, in addition to pressing the workpiece 110 to form the workpiece 110, joining the stiffening members 111 to the workpiece 110, the method may eliminate joining the stiffening members 111 to the workpiece 110, and may include pressing the workpiece 110 to form the workpiece 110 alone.

Although, with the method for forming the workpiece 110, all the member-accommodating blocks 30 accommodate the respective stiffening members 111 and thus eight stiffening members 111 are joined to the workpiece 110, at least one member-accommodating block 30 may accommodate a stiffening member 111, and thus at least one stiffening member 111 may be joined to the workpiece 110.

Although the workpiece 110 is a flat plate, prepregs stacked on one another to be a curved surface by a person or an automatic stacking device may be used as the workpiece 110.

The method for forming a workpiece is implementable by an apparatus other than the forming apparatus 100 described above.

The functions implementable by the components described herein may be implementable by circuitry or processing circuitry including a general-purpose processor, a special-purpose processor, an integrated circuit, an application-specific integrated circuit (ASIC), a CPU, a known circuit, or a combination of any of these circuits that are programmed to implement the functions described herein. The processor includes a transistor and another circuit and may be circuitry or processing circuitry. The processor may be a programmable processor that executes a program stored in a memory.

Any circuitry, units, and means herein are hardware programmed to implement the functions described herein or hardware that performs these functions. The hardware may be any hardware described herein, any hardware programmed to implement the functions described herein, or any hardware known to implement these functions.

When the hardware is a processor that is one type of circuitry, the circuitry, means, or units may be a combination of hardware and software that serves as either the hardware or the processor, or both.

### Aspects

The above embodiments are specific examples of the aspects below.

### Aspect 1

A lower die 1 (die) includes a die surface 1a on which a workpiece 110 containing a resin is placeable. The lower die 1 presses the workpiece 110 together with an upper die 2 (counter die) facing the die surface 1a while heating the workpiece 110. The lower die 1 includes at least one heating block 10 including a support surface 10a and a heater 12, and a support mount 20 facing the at least one heating block 10 at a position opposite to the support surface 10a. The support surface 10a is included in the die surface 1a to support the workpiece 110. The support mount 20 supports the at least one heating block 10. The support mount 20 includes at least one cooling channel 22 that allows a cooling medium to pass through.

In the structure according to aspect 1, the support mount 20 includes the cooling channel 22 that allows a cooling medium to pass through. The support mount 20 is cooled and is thus less likely to deform thermally, reducing thermal deformation of the lower die 1. The workpiece 110 is thus less susceptible to thermal deformation of the lower die 1 when the workpiece 110 is pressed while being heated, improving the accuracy of forming the workpiece 110.

### Aspect 2

In the lower die 1 according to aspect 1, the at least one heating block 10 and the support mount 20 are separate from each other.

In the structure according to aspect 2, the heating block 10 can be easily removed from the support mount 20, and can be replaced easily.

### Aspect 3

In the lower die 1 according to aspect 1 or aspect 2, the at least one heating block 10 includes a plurality of heating blocks 10 along the die surface 1a, and two adjacent heating blocks 10 of the plurality of heating blocks 10 have a clearance S1 between the two adjacent heating blocks 10 at room temperature.

In the structure according to aspect 3, two adjacent heating blocks 10 have the clearance S1 between them. Thus, when the heating blocks 10 expand thermally in the direction along the die surface 1a, the clearances S1 accommodate thermal expansion of the heating blocks 10, thus further reducing thermal deformation of the lower die 1. More specifically, when the heating blocks 10 expand thermally, the clearances S1 prevent the heating blocks 10 from pushing adjacent heating blocks 10 excessively. The workpiece 110 is thus far less susceptible to thermal deformation of the lower die 1, further improving the accuracy of forming the workpiece 110.

### Aspect 4

In the lower die 1 according to any one of aspects 1 to 3, the at least one heating block 10 includes a plurality of heating blocks 10 arranged in a width direction Dh of the die surface 1a perpendicular to a longitudinal direction Dn of the die surface 1a as viewed in a pressing direction Dp in which the workpiece 110 is pressed. The lower die 1 further includes at least one member-accommodating block 30 between a first heating block 10 and a second heating block 10 adjacent to each other of the plurality of heating blocks 10. The at least one member-accommodating block 30 includes a recess 31 being open on the die surface 1a to accommodate a stiffening member 111 to be joined to the workpiece 110. The at least one member-accommodating block 30 is supported on the support mount 20.

In the structure according to aspect 4, the member-accommodating block 30 is supported on the support mount 20. When the stiffening member 111 is joined to the workpiece 110, the support mount 20 is cooled. The cooling effect of the support mount 20 thus cools the member-accommodating block 30. This reduces thermal deformation of the member-accommodating block 30, thus further reducing thermal deformation of the lower die 1. The workpiece 110 is thus far less susceptible to thermal deformation of the lower die 1, further improving the accuracy of forming the workpiece 110.

### Aspect 5

In the lower die 1 according to any one of aspects 1 to 4, the at least one member-accommodating block 30 includes a plurality of member-accommodating blocks 30 arranged in the width direction Dh of the die surface 1a. The plurality of heating blocks 10 and the plurality of member-accommodating blocks 30 are arranged alternately in the width direction Dh.

In the structure according to aspect 5, the heating blocks 10 and the member-accommodating blocks 30 are arranged alternately in the width direction Dh. Each member-accommodating block 30 is thus likely to receive heat from the heating blocks 10 adjacent to the member-accommodating block 30. However, the member-accommodating block 30 is cooled by the cooling effect of the support mount 20. This reduces thermal deformation of the member-accommodating block 30. Thus, the pitch between two adjacent member-accommodating blocks 30 of all the member-accommodating blocks 30 does not vary, further improving the accuracy of forming the workpiece 110.

### Aspect 6

The lower die 1 according to any one of aspects 1 to 5 further includes an insulator 41 between the first heating block 10 and the at least one member-accommodating block 30 and an insulator 41 between the second heating block 10 and the at least one member-accommodating block 30.

In the structure according to aspect 6, the insulator 41 is located between the first heating block 10 and the member-accommodating block 30, and the insulator 41 is located between the second heating block 10 and the member-accommodating block 30. Heat from the first heating block 10 and the second heating block 10 is thus less likely to be transmitted to the member-accommodating block 30. This further reduces thermal deformation of the member-accommodating block 30, further reducing thermal deformation of the lower die 1. The workpiece 110 is thus far less susceptible to thermal deformation of the lower die 1, further improving the accuracy of forming the workpiece 110.

### Aspect 7

In the lower die 1 according to any one of aspects 1 to 6, the first heating block 10 and the at least one member-accommodating block 30 have a clearance S2 between the first heating block 10 and the at least one member-accommodating block 30 at room temperature, and the second heating block 10 and the at least one member-accommodating block 30 have a clearance S2 between the second heating block 10 and the at least one member-accommodating block 30 at room temperature.

In the structure according to aspect 7, the first heating block 10 and the member-accommodating block 30 have the clearance S2 between them, and the second heating block 10 and the member-accommodating block 30 have the clearance S2 between them. Thus, when the first heating block 10 and the second heating block 10 expand thermally in the width direction Dh of the die surface 1a, the clearances S2 accommodate the thermal expansion of the first heating block 10 and the second heating block 10, thus further reducing thermal deformation of the lower die 1. More specifically, when the heating blocks 10 expand thermally, the clearances S2 prevent the heating blocks 10 from pushing adjacent member-accommodating blocks 30 excessively. The workpiece 110 is thus far less susceptible to thermal deformation of the lower die 1, further improving the accuracy of forming the workpiece 110.

### Aspect 8

In the lower die 1 according to any one of aspects 1 to 7, the at least one member-accommodating block 30 includes a plurality of member-accommodating blocks 30 arranged in the width direction Dh of the die surface 1a. Each of the plurality of member-accommodating blocks 30 overlaps the at least one cooling channel 22 as viewed in the pressing direction Dp.

In the structure according to aspect 8, each member-accommodating block 30 overlaps the cooling channel 22 as viewed in the pressing direction Dp, and is thus easily cooled by the cooling channel 22. This further reduces thermal deformation of the member-accommodating block 30, further reducing thermal deformation of the lower die 1. The workpiece 110 is thus far less susceptible to thermal deformation of the lower die 1, further improving the accuracy of forming the workpiece 110.

### Aspect 9

In the lower die 1 according to any one of aspects 1 to 8, the at least one heating block 10 includes a plurality of heating blocks 10 arranged in a width direction Dh of the die surface 1a perpendicular to a longitudinal direction Dn of the die surface 1a as viewed in a pressing direction Dp in which the workpiece 110 is pressed. Each of the plurality of heating blocks 10 includes an end 15 opposite to the support surface 10a in the pressing direction Dp. In a cross section perpendicular to the longitudinal direction Dn of the die surface 1a, the at least one cooling channel 22 includes a plurality of cooling channels 22 arranged in the width direction Dh of the die surface 1a. Each of the plurality of cooling channels 22 is located farther than the end 15 of a nearest heating block 10 of the plurality of heating blocks 10 in a direction from the support surface 10a to the end 15. The direction from the support surface 10a to the end 15 is aligned with the pressing direction Dp.

In the structure according to aspect 9, in a cross section perpendicular to the longitudinal direction Dn of the die surface 1a, each cooling channel 22 is located farther than the end 15 (lower end) of the nearest heating block 10 in the direction from the support surface 10a to the end 15. The direction from the support surface 10a to the end 15 is aligned with the pressing direction Dp (downward). The heating blocks 10 are thus less susceptible to the cooling effect of the cooling channels 22, maintaining the heating effect of the heating blocks 10 on the workpiece 110.

### Aspect 10

The lower die 1A according to any one of aspects 1 to 9 further includes a base 50 supporting the support mount 20A. The support mount 20A includes a cavity 211 being open to the base 50, and a pillar 212 that transmits, to the base 50, a force applied to the die surface 1a when the lower die 1A presses the workpiece 110 together with the upper die 2.

In the structure according to aspect 10, the cavity 211 reduces thermal expansion of the support mount 20A. A wire to supply electric power to a heater 12 or a pipe to supply a heating medium to the heater 12 can be placed through the cavity 211.

### Aspect 11

An apparatus 100 for forming a workpiece includes the lower die 1 according to any one of aspects 1 to 10 on which a workpiece 110 containing a resin is placeable to heat the workpiece 110, and the upper die 2 that presses the workpiece 110 together with the lower die 1 to form the workpiece 110.

The structure according to aspect 11 includes the lower die 1. Thus, the support mount 20 is cooled and is thus less likely to deform thermally, reducing thermal deformation of the lower die 1. The workpiece 110 is thus less susceptible to thermal deformation of the lower die 1 when the workpiece 110 is pressed while being heated, improving the accuracy of forming the workpiece 110.

### Aspect 12

A method for forming a workpiece includes preparing the lower die 1 according to any one of aspects 1 to 10, placing the workpiece 110 on the die surface 1a of the lower die 1, and pressing the workpiece 110 with the lower die 1 and the upper die 2 to form the workpiece 110 while heating the at least one heating block 10 and cooling the support mount 20 with the cooling medium flowing through the at least one cooling channel 22.

In the structure according to aspect 12, the support mount 20 is cooled and is thus less likely to deform thermally, reducing thermal deformation of the lower die 1. The workpiece 110 is thus less susceptible to thermal deformation of the lower die 1 when the workpiece 110 is pressed while being heated, improving the accuracy of forming the workpiece 110.

### Aspect 13

A lower die 1B includes a die surface 1a on which a workpiece 110 containing a resin is placeable. The lower die 1B presses the workpiece 110 together with an upper die 2 facing the die surface 1a while heating the workpiece 110. The lower die 1B includes a support mount 20B including the die surface 1a and a heater 12, and a base 50 supporting the support mount 20B. The support mount 20B includes a cavity 211 being open to the base 50, and a pillar 212 that transmits, to the base 50, a force applied to the die surface 1a when the lower die 1B presses the workpiece 110 together with the upper die 2.

In the structure according to aspect 13, the cavity 211 reduces thermal expansion of the support mount 20B, thus reducing thermal deformation of the lower die 1B. The workpiece 110 is thus less susceptible to thermal deformation of the lower die 1B when the workpiece 110 is pressed while being heated, improving the accuracy of forming the workpiece 110. A wire to supply electric power to the heater 12 or a pipe to supply a heating medium to the heater 12 can be placed through the cavity 211.

### REFERENCE SIGNS LIST

1, 1A, 1B lower die (die)
1a die surface
2 upper die (counter die)
10 heating block
10a support surface
12 heater
15 end
20, 20A, 20B support mount
21a support surface
211 cavity
212 pillar
22 cooling channel
30 member-accommodating block
31 recess
41 insulator
50 base
100 apparatus for forming a workpiece
110 workpiece
111 stiffening member
S1, S2 clearance
Dp pressing direction
Dn longitudinal direction
Dh width direction

## Claims

1. A die including a die surface on which a workpiece containing a resin is placeable, the die being configured to press the workpiece together with a counter die facing the die surface while heating the workpiece, the die comprising:
at least one heating block including a support surface and a heater, the support surface being included in the die surface to support the workpiece; and
a support mount facing the at least one heating block at a position opposite to the support surface, the support mount supporting the at least one heating block, the support mount including at least one cooling channel configured to allow a cooling medium to pass through.

2. The die according to claim 1, wherein
the at least one heating block and the support mount are separate from each other.

3. The die according to claim 1, wherein
the at least one heating block comprises a plurality of heating blocks along the die surface, and two adjacent heating blocks of the plurality of heating blocks have a clearance between the two adjacent heating blocks at room temperature.

4. The die according to claim 1, wherein
the at least one heating block comprises a plurality of heating blocks arranged in a width direction of the die surface perpendicular to a longitudinal direction of the die surface as viewed in a pressing direction in which the workpiece is pressed,
the die further comprises at least one member-accommodating block between a first heating block and a second heating block adjacent to each other of the plurality of heating blocks, and the at least one member-accommodating block includes a recess being open on the die surface to accommodate a stiffening member to be joined to the workpiece, and
the at least one member-accommodating block is supported on the support mount.

5. The die according to claim 4, wherein
the at least one member-accommodating block comprises a plurality of member-accommodating blocks arranged in the width direction of the die surface, and
the plurality of heating blocks and the plurality of member-accommodating blocks are arranged alternately in the width direction.

6. The die according to claim 4, further comprising:
an insulator between the first heating block and the at least one member-accommodating block and an insulator between the second heating block and the at least one member-accommodating block.

7. The die according to claim 4, wherein
the first heating block and the at least one member-accommodating block have a clearance between the first heating block and the at least one member-accommodating block at room temperature, and the second heating block and the at least one member-accommodating block have a clearance between the second heating block and the at least one member-accommodating block at room temperature.

8. The die according to claim 4, wherein
the at least one member-accommodating block comprises a plurality of member-accommodating blocks arranged in the width direction of the die surface, and
each of the plurality of member-accommodating blocks overlaps the at least one cooling channel as viewed in the pressing direction.

9. The die according to claim 1, wherein
the at least one heating block comprises a plurality of heating blocks arranged in a width direction of the die surface perpendicular to a longitudinal direction of the die surface as viewed in a pressing direction in which the workpiece is pressed,
each of the plurality of heating blocks includes an end opposite to the support surface in the pressing direction, and
in a cross section perpendicular to the longitudinal direction of the die surface, the at least one cooling channel comprises a plurality of cooling channels arranged in the width direction of the die surface, each of the plurality of cooling channels is located farther than the end of a nearest heating block of the plurality of heating blocks in a direction from the support surface to the end, and the direction from the support surface to the end is aligned with the pressing direction.

10. The die according to claim 1, further comprising:
a base supporting the support mount,
wherein the support mount includes
a cavity being open to the base, and
a pillar configured to transmit, to the base, a force applied to the die surface when the die presses the workpiece together with the counter die.

11. An apparatus for forming a workpiece, comprising:
the die according to claim 1 on which a workpiece containing a resin is placeable to heat the workpiece; and
the counter die configured to press the workpiece together with the die according to claim 1 to form the workpiece.

12. A method for forming a workpiece, the method comprising:
preparing the die according to claim 1;
placing the workpiece on the die surface of the die; and
pressing the workpiece with the die and the counter die to form the workpiece while heating the at least one heating block and cooling the support mount with the cooling medium flowing through the at least one cooling channel.
